**Europäisches Patentamt**

**European Patent Office**

**Office européen des brevets**

(19)

(11) Veröffentlichungsnummer: **0 278 273 B1**

(12)

# EUROPÄISCHE PATENTSCHRIFT

(45) Veröffentlichungstag der Patentschrift:
**28.11.90**

(51) Int. Cl.⁵: **F24J 2/46**, F24J 2/04

(21) Anmeldenummer: **88100765.2**

(22) Anmeldetag: **20.01.88**

(54) Gehäuse, bestehend aus einer Mehrzahl von Bauteilen, zur Aufnahme von Wärmetauschern.

(30) Priorität: **23.01.87 IT 2060087**

(43) Veröffentlichungstag der Anmeldung:
**17.08.88 Patentblatt 88/33**

(45) Bekanntmachung des Hinweises auf die Patenterteilung:
**28.11.90 Patentblatt 90/48**

(84) Benannte Vertragsstaaten:
**AT BE CH DE ES FR GB GR LI LU NL SE**

(56) Entgegenhaltungen:
**EP-A- 0 029 180**
**DE-A- 2 712 446**
**DE-A- 2 929 215**

(73) Patentinhaber: **ACQUINDUSTRIALI S.r.l., Via Vincenzo Monti, 51, I-20123 Milano(IT)**

(72) Erfinder: **Neri, Bruno, Via Vincenzo Monti, 51, I-20123 Milano(IT)**

(74) Vertreter: **Jaumann, Paolo, Studio Consulenza Brevetti Jaumann Piazza Castello, 2, I-20121-Milano(IT)**

## Beschreibung

Die Erfindung betrifft ein aus einer Mehrzahl von Bauteilen bestehendes Gehäuse, das zur Aufnahme von Wärmeaustauschern bestimmt ist, wie diese beispielsweise auf Dächern von Gebäuden aufzustellen sind.

## Vorteile der Erfindung

Das erfindungsgemässe Gehäuse mit den kennzeichnenden Merkmalen des Hauptanspruches hat gegenüber bekannten Lösungen dieser Art den Vorteil, den Platzbedarf im Lager und bei der Beförderung erheblich zu vermindern und dabei mit Bauteilen eines einzigen Typs die Herstellung von Gehäusen mit unterschiedlichen Abmessungen des Querschnittes zu ermöglichen. Darüberhinaus besteht ein besonderer Vorteil darin, dass da Gehäuse, zum Zweck seiner Aufstellung auf Dächern oder an sonstigen schwer zugänglichen Stellen, zerlegbar ist, so dass Hindernisse (Wände, Aufzüge) überwindbar sind, welche dessen Durchgang im aufgebautem Zustand ansonsten nicht zulassen würden.

Durch die in den Unteransprüchen angeführten Massnahmen sind vorteilhafte Weiterbildungen des Erfindungsgegenstandes möglich.

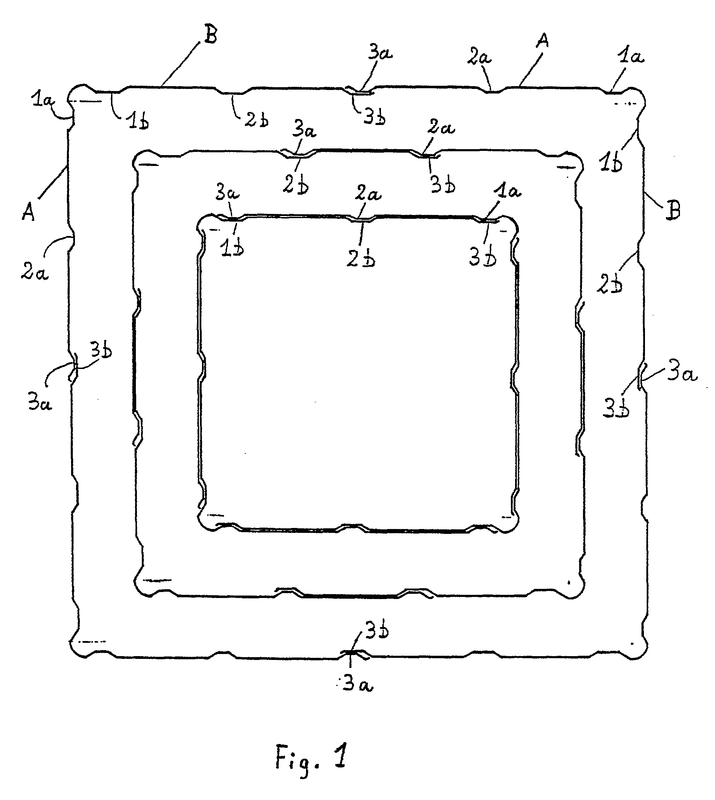

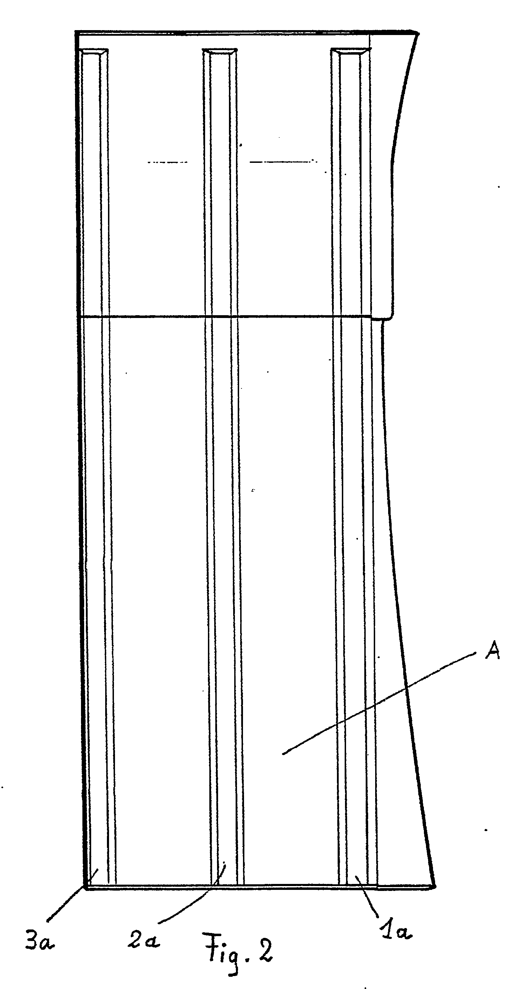

Ein Ausführungsbeispiel des Erfindungsgegenstandes ist in der Zeichnung dargestellt und in der nachfolgen Beschreibung näher erläutert. Es zeigen Figur 1, im Querschnitt, drei mögliche ineinandergeschachtelt gezeichnete Zusammenfügungen erfindungsgemässer Bauteile zu einem Gehäuse mit viereckigem Querschnitt und Figur 2 ein erfindungsgemässes Bauteil in schematischer Seitenansicht.

Im Ausführungsbeispiel gemäss Figur 1 sind vier erfinungsgemässe Bauteile verschiedenartig zusammengefügt. Jedes Bauteil besteht aus einem Winkelprofil mit zwei Schenkeln A und B. Jeder Schenkel besitzt im vorliegenden Fall drei rastermässig verteilte Passrippen, die sich parallel zu der gemeinsamen Kante erstrecken. Die Passrippen des Schenkels A sind mit 1a, 2a, 3a und diejenigen des Schenkels B sind mit 1b, 2b 3b bezeichnet.

Bei einer möglichen Zusammenfügung der Bauteile (äussere Darstellung in Fig. 1) sind diese jeweils nur an einer Passrippe je Schenkel, nämlich an den Rippenpaaren 3a-3b zusammengefügt und bilden somit ein Gehäuse mit verhältnismässig grossem viereckigen Querschnitt. Eine zweite mögliche Zusammenfügung (mittlere Darstellung in Fig. 1) kann an zwei Passrippen je Schenkel, nämlich an den rippenpaaren 2a-2b und 3a-2b erfolgen und ergibt ein Gehäuse, dessen Querschnitt zwar noch viereckig, jedoch kleiner ist. Im dritten Fall (innere Darstellung in Fig. 1) sind sämtliche Passrippen der vier Bauteile an deren Zusammenfügung beteiligt, so dass formschlüssige Verbindungen an den Rippenpaaren 3a-1b, 2a-2b und 1a-3b entstehen. Dabei erhält man wiederum ein viereckiges Gehäuse, welches diesmal einen noch kleineren Querschnitt aufweist.

Bei der schematischen Seitenansicht eines erfindungsgemässen Bauteiles nach Figur 2 sind gleiche Teile mit den gleichen Bezugszeigen wie in Figur 1 versehen.

Durch geeignete Wahl der zusammenzufügenden Passrippen und/oder des von den beiden Schenkeln eines Bauteiles eingeschlossenen Winkels können Gehäuse mit rechteckigem, aber auch viereckigem Querschnitt zusammengestellt werden.

Nach dem Aufbau eines erfindungsgemässen Gehäuses können dessen Bauteile zweckmässigerweise an den zusammengefügten Passrippen in an sich bekannter Weise kraftschlüssig untereinander verbunden werden. Diese Verbindung kann also beispielsweise durch Schweissen, Zusammenschrauben, Zusammenkleben oder dergleichen bewerkstelligt werden.

Die formschlüssige Aneinanderfügung ind insbesondere die kraftschlüssige Verbindung von Passrippen benachbarter Winkelprofile erteilt dem damit hergestellten Gehäuse die bestimmungsgemäss erforderliche Festigkeit.

## Patentansprüche

1. Gehäuse, bestehend aus einer Mehrzahl von Bauteilen, zur Aufnahme von Wärmeaustauschern, dadurch gekennzeichnet, dass die Bauteile aus Winkelprofilen bestehen, deren erster und zweiter Schenkel (A bzw. B) je eine Anzahl rastermässig verteilter Passrippen besitzen, die sich parallel zu der gemeinsamen Kante der beiden Schenkel erstrecken, wobei die Form und Lage der Passrippen (z.B. 3a) des ersten Schenkels (A) eines Bauteils so gewählt sind, dass diese Passrippen in Passrippen (z.B 3b) des zweiten Schenkels (B) eines weiteren gleichartigen Bauteils eingreifen.

2. Gehäuse nach Anspruch 1, dadurch gekennzeichnet, dass vier Bauteile an zumindest einer Passrippe je Schenkel derart zusammengefügt sind, dass sie ein Gehäuse mit rechteckigem, insbesondere viereckigem Querschnitt bilden.

3. Gehäuse nach Anspruch 1 oder 2 , dadurch gekennzeichnet, dass dessen Bauteile an den zusammengefügten Passrippen in an sich bekannter Weise, z.B durch Schweissen, Zusammenschrauben, Zusammenkleben oder dergleichen, kraftschlüssig untereinander verbunden sind.

## Claims

1. Housing, consisting of a plurality of structural elements, for housing heat exchangers, characterised in that the structural elements consist in angular shapes, the first and second leg of which (respectively A and B) have a certain number of uniformly distributed fitting ribs, which extend parallel to the corner common to both legs, the form and arrangement of fitting ribs (for example 3a) belonging to the first leg (A) of a structural element being chosen so that these fitting ribs fit fitting ribs (for example 3b) belonging to the second leg (B) of another analogous structural element,

2. Housing according to claim 1, characterised in that four structural elements are joined together at least at one fitting rib of each leg so that they form a container having a rectangular, specially square cross section.

3. Housing according to claims 1 and 2, characterised in that its structural elements are mechanically connected together at the joined fitting ribs in a manner known for its own account, for example by welding, screwing, pasting or the like.

**Revendications**

1. Boitier constitué, de plusieurs éléments constitutifs et destinées à la réception d'échangeurs de chaleur, caractérisée en ce que les éléments constitutifs sont formés de cornières dont les première et seconde branches (A et B) possèdent chacune un grand nombre de nervures d'ajustement réparties suivant un réseau et qui s'étendent parallèlement au bord commun des deux branches, la forme et la position des nervures d'ajustement (par exemple 3a) de la première branche (A) d'un élément constitutif étant telles que ces nervures d'ajustement pénètrent dans des nervures d'ajustement (par exemple 3b) de la seconde branche (B) d'un autre élément constitutif analogue.

2. Boitier suivant la revendication 1, caractérisée en ce que quatre éléments constitutifs sont assemblés sur au moins une nervure d'ajustement pour chaque branche, de façon à former une enveloppe de section transversale tétragonale, notamment rectangulaire.

3. Boitier suivant la revendication 1 ou 2, caractérisée en ce que les éléments constitutifs sont reliés entre eux par coopération de force sur les nervures d'ajustement assemblées, d'une manière en soi connue, par exemple par soudage, par vissage, par collage ou analogue.

Fig. 1

Fig. 2

3a   2a   1a   A